# EUROPÄISCHE PATENTSCHRIFT

(11) **EP 1 245 910 B1**
(45) Veröffentlichungstag und Bekanntmachung des Hinweises auf die Patenterteilung: **01.10.2003**
(21) Anmeldenummer: 02006592.6
(22) Anmeldetag: 22.03.2002
(51) Int. Cl.: F25B 30/04, F25B 17/08

(54) **Verfahren zum Betrieb einer Adsorptionswärmepumpe**
Method of operating an adsorption heat pump
Procédé pour le fonctionnement d'une pompe à chaleur à adsorption

(30) Priorität: 26.03.2001 DE 10114789; 07.07.2001 DE 10134699
(43) Veröffentlichungstag der Anmeldung: 02.10.2002
(73) Patentinhaber: Vaillant GmbH, 42859 Remscheid (DE)
(72) Erfinder: Hocker, Thomas, Dr., 42857 Remscheid (DE); Lang, Rainer, Dr., 51067 Köln (DE); Marth, Frank, 56581 Melsbach (DE); Marx, Uwe, 51375 Leverkusen (DE); Prescha, Ralf, 42659 Solingen (DE); Wienen, Johann, 46359 Heiden (DE); Dawoud, Belal, Dr., 52066 Aachen (DE); Gasper, Ralf, 52156 Monschau (DE); Miltkau, Thorsten, 52066 Aachen (DE); Stricker, Marc, 52064 Aachen (DE)
(74) Vertreter: Hocker, Thomas

(56) Entgegenhaltungen:
- EP-A- 0 840 077
- DE-A- 19 726 286
- DE-A- 19 730 699
- DE-A- 19 834 696
- DE-A- 19 902 695
- DE-C- 869 079
- US-A- 1 273 364
- US-A- 2 050 959
- US-A- 4 161 211
- US-A- 5 174 367

## Beschreibung

Die Erfindung bezieht sich zunächst auf eine Adsorptionswärmepumpe gemäß dem Oberbegriff des unabhängigen Sachanspruch und dann auf ein Verfahren zum Betrieb einer derartigen Adsorptionswärmepumpe gemäß dem unabhängigen Verfahrensanspruches.

In Adsorptionswärmepumpen wird in einem Desorber Kältemittel (meist Wasser) desorbiert und dieses Kältemittel in einem Kondensator kondensiert. Desorber und Kondensator bilden ein Wärmepumpen-Modul. Zeitgleich adsorbiert anderenorts ein Adsorber Kältemittel, das von einem Verdampfer verdampft wurde. Adsorber und Verdampfer bilden ein dem erstgenannten baugleiches Wärmepumpen-Modul. Diese beiden Sorptionsvorgänge sind nicht konstant, sondern eine Funktion der Temperatur, des Druckes und der Menge des vorhandenen Kältemittels. Dies bedeutet, dass die Ad- und Desorptionsvorgänge sich beim Betrieb von Adsorptionswärmepumpen abschwächen und nach einer gewissen Zeit nur noch relativ geringe Energieflüsse vorhanden sind. Daher müssen die Wärmepumpen-Module nach einer definierten Zeit (etwa 80% der möglichen Energie ist übertragen) umgeschaltet werden, so dass der Desorber zum Adsorber wird und umgekehrt (Adsorber-Desorber-Kreislauf). In gleicher Weise muss ― zumindest bei Wärmepumpen, die beispielsweise aus DE 199 02 694 und DE 100 61 677 bekannt sind - auch der Verdampfer zum Kondensator und der Kondensator zum Verdampfer werden (Solekreisläufe). Bei bekannten Verfahrensführungen werden beide Kreisläufe zur gleichen Zeit umgeschaltet. Dadurch wird der heiße Kondensator (Sole um 35°C) aus dem Heiznetz unmittelbar mit der kälteren Umweltwärmequelle (typisch Sole um 0°C) verbunden, wodurch Wärme aus dem HeizungsSystem in die Umgebung gelangt, wodurch nicht unerhebliche Verluste entstehen.

Ziel der Erfindung ist es, diesen Nachteil zu vermeiden und eine Adsorptionswärmepumpe vorzuschlagen, die sich durch einen einfachen Aufbau auszeichnet. Ein weiteres Ziel der Erfindung ist es, ein Verfahren der eingangs erwähnten Art vorzuschlagen, bei dem Verluste bei der Umschaltung der einzelnen Baugruppen der Wärmepumpenmodule weitgehend vermieden werden.

Erfindungsgemäß wird dies bei einer Adsorptionswärmepumpe der eingangs erwähnten Art durch die kennzeichnenden Merkmale des unabhängigen Verfahrensanspruches erreicht.

Durch die vorgeschlagenen Maßnahmen wird erreicht, dass die Adsorptionswärmepumpe die Wärme, die bei einer gleichzeitigen Umschaltung der Baugruppen der beiden Module verloren ginge, zur Aufheizung des Verdampfers, der zum Kondensator wird, nutzen kann, wodurch die Verluste in den Umschaltzeiten deutlich reduziert werden und beziehungsweise oder ein Temperaturausgleich in dem Verdampfer und Kondensator stattfindet, wodurch Wärmeverluste vermieden werden.

Gemäß den Merkmalen des Anspruchs 2 wird eine vorteilhafte Ausgestaltung der Adsorber beziehungsweise Desorber geschützt.

Durch die Merkmale des Anspruchs 3 werden vorteilhafte Verfahrensschritte zum Betreiben einer entsprechenden Adsorptionswärmepumpe geschützt, wodurch ― wie bereits zu Anspruch 1 beschrieben - die Wärme, die bei einer gleichzeitigen Umschaltung der Baugruppen der beiden Modute verloren ginge, zur Aufheizung des Verdampfers, der zum Kondensator wird, genutzt wird und Wärmeverluste vermieden werden.

Gemäß den kennzeichnenden Merkmalen des Anspruchs 4 ergibt sich der Vorteil, dass kostengünstig der Adsorber-Desorber-Kreislauf umgeschaltet werden kann, indem mittels einer Umschaltvorrichtung die Durchströmungsrichtung umgekehrt wird ohne dabei z.B. eine teure drehrichtungsumkehrbare Pumpe, die zudem einen schlechteren Wirkungsgrad aufweist, einsetzen zu müssen.

Die Merkmale des Anspruchs 5 schützen vorteilhafte Prozesszeiten für den Sorptionsprozess.

Gemäß den Merkmalen des Anspruchs 6 wird der Adsorptions- / Desorptionsvorgang beendet, sobald das Wärmeträgermedium im Adsorber-Desorber-Kreislauf innerhalb oder stromab des Adsorbers oder Desorbers eine bestimmte Temperatur unter- oder überschreitet. Bei der Adsorption wird Wärme frei; der Adsorber erhitzt sich. Ein Teil der Wärme geht auf das Wärmeträgermedium im Adsorber-Desorber-Kreislauf über. Zunächst erhitzt sich das Wärmeträgermedium. Da im Laufe der Zeit der Zeolith seiner Sättigungsgrenze nahe kommt, nimmt die Adsorption ab; d.h. immer weniger Wärme wird frei. Da gleichzeitig der Adsorber durch das Wärmeträgermedium gekühlt wird, endet der Temperaturanstieg und die Temperatur fällt wieder. Die maximale Temperatur des Wärmeträgermediums ist unter anderem von der Ausführungsform und Zusammensetzung des Adsorbers sowie der Strömungsgeschwindigkeit des Wärmeträgermediums und den Energieströmen in den anderen Wärmeaustauschern abhängig.

Anstelle von festen Grenztemperaturen gemäß Anspruch 6 wird gemäß den Merkmalen des Anspruchs 7 der Adsorptions- / Desorptionsprozeß dann beendet, sobald die Prozesse nur noch langsam laufen, was anhand von Temperaturgradienten im Adsorber-Desorber-Kreislauf festgestellt wird.

Eine weitere Möglichkeit, den Adsorptions- / Desorptionsprozeß vorteilhaft zu beenden wird durch die Merkmale des Anspruch 8 beschrieben. Dementsprechend wird die Aufheizung beziehungsweise Abkühlung in dem Adsorber beziehungsweise Desorber gemessen. Ist die Temperaturdifferenz gering, so ist dies ein Anzeichen dafür, dass der Prozess weitestgehend abgeschlossen ist. Dies setzt jedoch voraus, dass der Prozess zunächst einmal in Gang gekommen ist, denn auch zu Beginn des Prozesses ist die Temperaturdifferenz entsprechend gering.

Gemäß den Merkmalen des Anspruchs 9 kann der Adsorptions- / Desorptionsprozeß auch dann vorteilhaft beendet werden, wenn der Druck im adsorbierenden Wärmepumpen-Modul einen gewissen Druck unterschreitet, was ein Indiz dafür ist, dass der Zeolith nahezu das gesamte Kältemittel adsorbiert hat.

Äquivalent hierzu kann gemäß den Merkmalen des Anspruchs 10 der Füllstand des Kältemittels im adsorbierenden Wärmepumpen-Modul gemessen werden. Ist kein oder nur noch wenig Kältemittel beim Verdampfer vorhanden, so kann der Adsorptionsprozess nicht mehr beziehungsweise nur noch gering stattfinden.

Äquivalent zu Anspruch 6 wird gemäß den Merkmalen des Anspruch 11 eine vorteilhafte Beendigung des Adsorptions- / Desorptionsprozeßes erreicht, der die Tatsache, dass der Desorber für die Desorption Energie aus dem Adsorber-Desorber-Kreislauf benötigt, zugrunde liegt. Hier findet zunächst eine Abkühlung statt, die sich verlangsamt und endet, um dann wieder in einen Temperaturanstieg überzugehen.

Anstelle von festen Grenztemperaturen gemäß Anspruch 11 wird gemäß den Merkmalen des Anspruchs 12 der Adsorptions- / Desorptionsprozeß dann beendet, sobald der Desorptions-Prozeß nur noch langsam läuft, was anhand von Temperaturgradienten im Adsorber-Desorber-Kreislauf festgestellt wird.

Eine weitere Möglichkeit den Adsorptions- / Desorptionsprozeß vorteilhaft zu beenden wird durch die Merkmale des Anspruch 13 beschrieben. Dementsprechend wird die Aufheizung beziehungsweise Abkühlung in dem Adsorber beziehungsweise Desorber gemessen. Ist die Temperaturdifferenz gering, so ist dies ein Anzeichen dafür, dass der Prozess weitestgehend abgeschlossen ist. Dies setzt jedoch voraus, dass der Prozess zunächst einmal in Gang gekommen ist, denn auch zu Beginn des Prozesses ist die Temperaturdifferenz entsprechend gering.

Gemäß den Merkmalen des Anspruchs 14 wird der Adsorptions- / Desorptionsprozeß dann vorteilhaft beendet, wenn der Druck im desorbierenden Modul einen Grenzwert unterschreitet, was als Indiz dafür gewertet wird, dass nur noch wenig Kältemittel am Kondensator kondensiert und somit die Desorption weitestgehend abgeschlossen ist.

Eine weitere Möglichkeit besteht gemäß Anspruch 15 darin, den Füllmittelstand des Kältemittels zu messen. Ist ein bestimmter Grenzwert überschritten, so muss das Kältemittel weitestgehend aus dem Desorber desorbiert sein.

Gemäß den Merkmalen des Anspruchs 16 ergibt sich der Vorteil, dass zunächst die Sorptionsprozesse ― und somit Energieflüsse - in den Wärmepumpen-Modulen zum Stillstand kommen, bevor die Wärmeaustauscher neu verschaltet werden. Hierdurch werden Verluste vermieden.

Die Merkmale des Anspruchs 17 schützen vorteilhafte Prozesszeiten für den Prozessschritt gemäß Anspruch 16.

Gemäß den Merkmalen der Ansprüche 18 und 19 kann anhand von geringen Temperaturdifferenzen festgestellt werden, dass die Energieflüsse gemäß Anspruch 16 annähernd zum Stillstand gekommen sind.

Gemäß den Merkmalen des Anspruchs 20 ergibt sich der Vorteil, dass ein Wärmeaustausch zwischen dem Kondensator und dem Verdampfer stattfindet, bevor diese ihre Funktion tauschen. Auch hierdurch werden Verluste vermieden.

Die Merkmale des Anspruchs 21 schützen vorteilhafte Prozesszeiten für den Prozessschritt gemäß Anspruch 20.

Gemäß den Merkmalen des Anspruchs 22 kann anhand der Unterschreitung einer bestimmten Temperaturdifferenz festgestellt werden, dass der Wärmeaustausch gemäß Anspruch 20 weitestgehend stattgefunden hat.

Gemäß den Merkmalen des Anspruchs 23 kann jeweils in den beiden Kreisläufen, welche den Verdampfer beziehungsweise den Kondensator beinhalten, ein Temperaturausgleich zwischen jeweils dem Leitungssystem und dem Wärmeaustauscher stattfinden.

Die Merkmale des Anspruchs 24 schützen vorteilhafte Prozesszeiten für den Prozessschritt gemäß Anspruch 23.

Gemäß den Merkmalen des Anspruchs 25 sind Beendigungskriterien für den Temperaturausgleich gemäß Anspruch 23 dadurch gegeben, dass kein sinnvoller Wärmestrom zwischen Kondensator und Heizungsrücklauf stattfinden kann.

Gemäß den Merkmalen des Anspruchs 26 sind Beendigungskriterien für den Temperaturausgleich gemäß Anspruch 23 dadurch gegeben, dass kein sinnvoller Wärmestrom zwischen Verdampfer und Umgebung stattfinden kann.

Gemäß den Merkmalen des Anspruchs 27 findet zunächst ein Temperaturausgleich zwischen dem Kondensator und dem Verdampfer statt, ehe der Verdampferbeziehungsweise Kondensatorkreislauf jeweils einen internen Temperaturausgleich vornimmt.

Gemäß den Merkmalen des Anspruchs 28 wird der Umschaltprozess vom Adsorber zum Desorber und umgekehrt, als auch vom Verdampfer zum Kondensator und umgekehrt abgeschlossen.

Ausführungsbeispiele der Erfindung werden im Folgenden anhand der Fig. 1 bis 12 der Zeichnungen erläutert. Es zeigen
Fig. 1 den Aufbau und die Verschaltung einer erfindungsgemäßen Adsorptionswärmepumpe während der eigentlichen Arbeitsphase, in der in den Wärmepumpen-Modulen Wärme übertragen wird,
Fig. 2 die Verschaltung derselben erfindungsgemäßen Adsorptionswärmepumpe während einer Übergangsphase,
Fig. 3 die Verschaltung derselben erfindungsgemäßen Adsorptionswärmepumpe während einer weiteren Übergangsphase,
Fig. 4 die Verschaltung derselben erfindungsgemäßen Adsorptionswärmepumpe während einer weiteren Übergangsphase,
Fig. 5 die Verschaltung derselben erfindungsgemäßen Adsorptionswärmepumpe während einer zweiten Arbeitsphase, in der in den Wärmepumpen-Modulen Wärme übertragen wird,
Fig. 6 die Verschaltung derselben erfindungsgemäßen Adsorptionswärmepumpe während einer weiteren Übergangsphase,
Fig. 7 die Verschaltung derselben erfindungsgemäßen Adsorptionswärmepumpe während einer weiteren Übergangsphase,
Fig. 8 die Verschaltung derselben erfindungsgemäßen Adsorptionswärmepumpe während einer weiteren Übergangsphase,
Fig. 9 den Aufbau einer erfindungsgemäßen Adsorptionswärmepumpe ohne Umschalteinrichtungen
Fig. 10 ein Wärmepumpen-Modul,
Fig. 11 einen Zeolith-Wärmeaustauscher und
Fig. 12 den Aufbau einer erfindungsgemäßen Adsorptionswärmepumpe mit möglichen Meßstellen zur Erfassung des Betriebszustandes.

In allen 12 Figuren bedeuten gleiche Bezugszeichen jeweils die gleichen Einzelheiten.

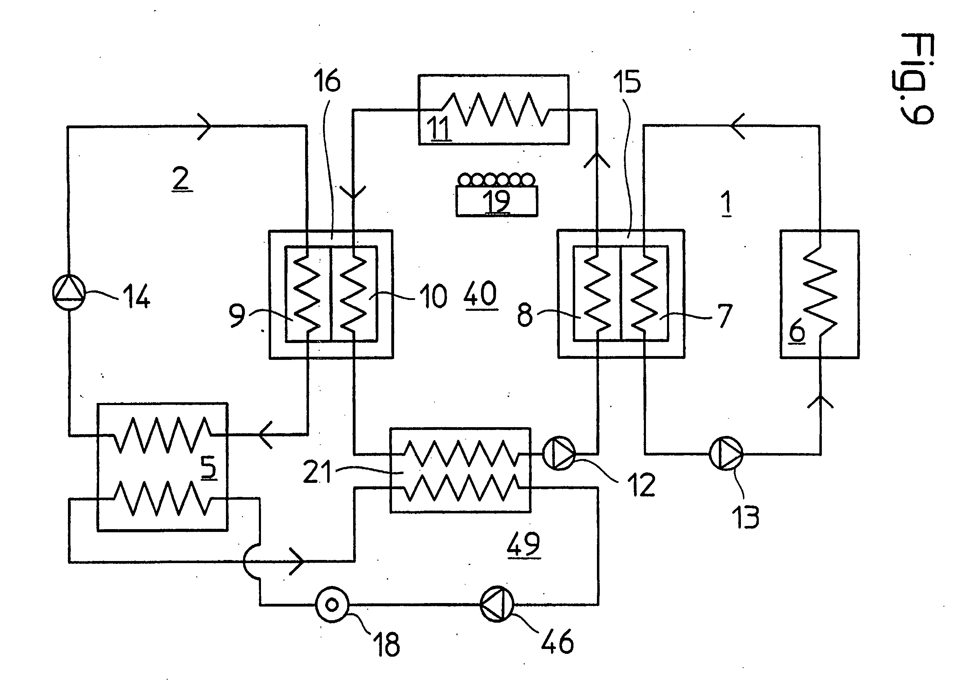

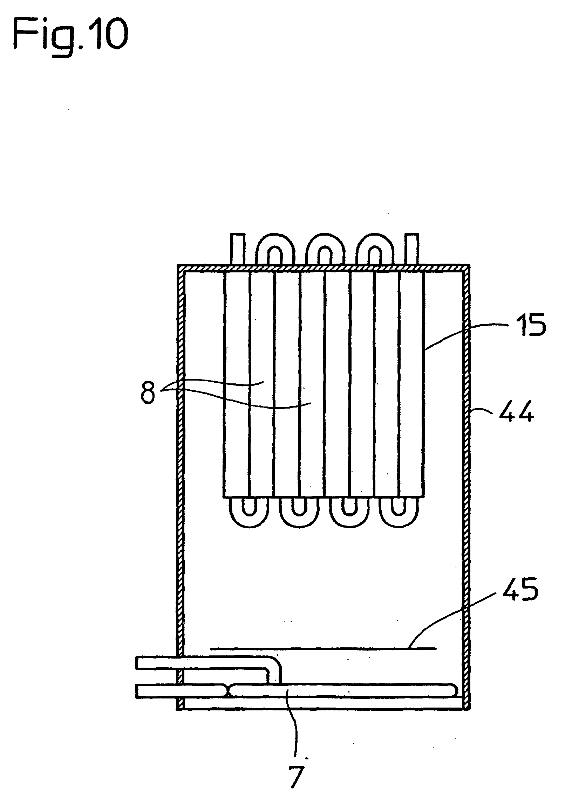

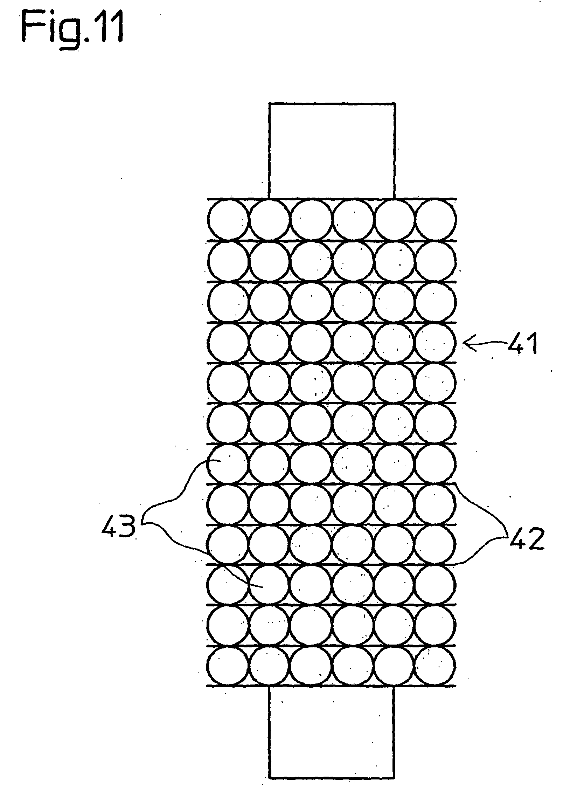

Eine Wärmepumpe gemäß Fig. 9 verfügt über einen Adsorber-Desorber-Kreislauf 40, in dem sich eine Wärmequelle in Form eines von einem Brenner 19 beheizten Primär-Wärmeaustauschers 11, ein Zeolith-Wärmeaustauscher 10, eine Umwälzpumpe 12, ein Heiznetzwärmeaustauscher 21 und ein weiterer Zeolith-Wärmeaustauscher 8, befinden, sowie ein Sole-Leitungssystem 1, das als Verdampferbereich arbeitet, in dem sich ein Kältemittelwärmeaustauscher 7, eine Umwälzpumpe 13 und eine Umweltwärmequelle 6 befinden und schließlich ein Sole-Leitungssystem 2, das als Kondensatorbereich arbeitet, in dem sich ein Kältemittelwärmeaustauscher 9, eine Umwälzpumpe 14 und ein Heiznetzwärmeaustauscher 5 befinden. Der Kältemittelwärmeaustauscher 9 und der Zeolith-Wärmeaustauscher 10 einerseits sowie der Kältemittelwärmeaustauscher 7 und der Zeolith-Wärmeaustauscher 8 andererseits sind jeweils als baugleiche Wärmepumpen-Module 16 und 15 gemäß Fig. 10 und 11 aufgebaut. Die Zeolith-Wärmeaustauscher 8 bzw. 10 verfügen über Rippenrohre 41, die zwischen den Rippen 42 mit Zeolithkugeln 43 gefüllt sind. Die Wärmepumpen-Module 16 und 15 sind jeweils von einen Vakuumbehälter 44 umfasst, in dem sich jeweils die Zeolith-Wärmeaustauscher 8 bzw. 10, der Kältemittelwärmeaustauscher 7 bzw. 9, ein Strahlungsschutz 45 zwischen diesen beiden Wärmeaustauschem und das Kältemittel Wasser befinden.

In dem in Fig. 9 dargestellten Betriebszustand arbeitet Zeolith-Wärmeaustauscher 10 als Desorber und der Zeolith-Wärmeaustauscher 8 als Adsorber, der Kältemittelwärmeaustauscher 7 als Verdampfer und der Kältemittelwärmeaustauscher 9 als Kondensator.

In diesem dargestellten Zustand wird das Wärmeträgermedium im Adsorber-Desorber-Kreislauf 40 im Primär-Wärmeaustauscher 11 von dem Brenner 19 erhitzt. Das heiße Wärmeträgermedium strömt in den Zeolith-Wärmeaustauscher 10, der als Desorber arbeitet. Die Zeolithkugeln 43 des Zeolith-Wärmeaustauscher 10 sind zunächst mit Wasser gesättigt. Die zugeführte Wärme bewirkt, dass das Wasser desorbiert wird und somit den Zeolith-Wärmeaustauscher 10 verläßt. Der so entstehende Wasserdampf kondensiert im Kältemittelwärmeaustauscher 9, der als Kondensator arbeitet und gibt somit Wärme an das Sole-Leitungssystem 2, das als Kondensatorbereich arbeitet, ab. Im Heiznetzwärmeaustauscher 21 wird das Wärmeträgermedium des Adsorber-Desorber-Kreislauf 40 weiter abgekühlt und die Wärme auf einen Heizungskreislauf 49 abgegeben. Im Wärmepumpen-Modul 15 ist der Zeolith im Zeolith-Wärmeaustauscher 8, der als Adsorber arbeitet, zunächst relativ trocken. Dem Kältemittelwärmeaustauscher 7, der als Verdampfer arbeitet, wird Umgebungswärme zugeführt. Hierdurch wird Wasser, das sich um den Kältemittelwärmeaustauscher 7 (Verdampfer) befindet, verdunstet. Der so entstehende Wasserdampf gelangt zum Zeolith des Zeolith-Wärmeaustauschers 8, der als Adsorber arbeitet, wodurch der Zeolith sich erhitzt. Diese Wärme gibt der Zeolith-Wärmeaustauscher 8 an den Adsorber-Desorber-Kreislauf 40 ab. Der Vorgang endet spätestens, wenn der Zeolith des Zeolith-Wärmeaustauschers 8 das gesamte im Wärmepumpen-Modul 15 befindliche Wasser aufgenommen hat oder der Zeolith-Wärmeaustauscher 10 seinen Wasserinhalt bis zum trockenen Gleichgewichtszustand des Desorbers bei dessen maximaler Betriebstemperatur abgegeben hat.

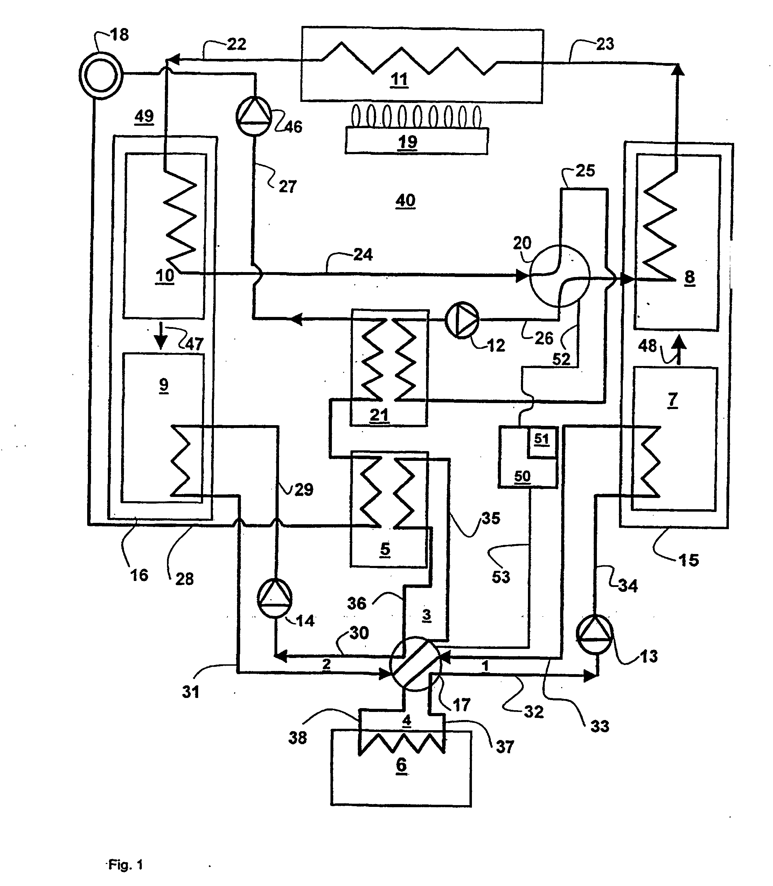

Um aus diesem Vorgang einen quasikontinuierlichen Prozess zu generieren, können die Module durch Umschaltung ihre Funktion tauschen. Der trockene Desorber wird zum Adsorber; der feuchte Adsorber zum Desorber. Damit sie als solche arbeiten können, muss der Verdampfer im Verdampferkreislauf zum Kondensator im Kondensatorkreislauf und der Kondensator im Kondensatorkreislauf zum Verdampfer im Verdampferkreislauf werden. Aus diesem Grunde sind die Wärmepumpen-Module 15 und 16 identisch aufgebaut, so dass durch eine entsprechende Verschaltung gemäß Fig. 1 bis 8 ein Kreislaufprozess stattfinden kann. Mittels einer Umschalteinrichtung 20 wird die Durchströmrichtung der Zeolith-Wärmeaustauscher 8 und 10 verändert sowie mittels einer weiteren Umschalteinrichtung 17 die Verbindung der Kältemittel-Wärmeaustauscher 7 und 9 mit dem Umweltwärmetauscher 6 und dem Heiznetzwärmeaustauscher 5 vertauscht.

Fig. 1 zeigt eine erfindungsgemäße Wärmepumpe, die sich von Fig. 9 dadurch unterscheidet, dass die Umschalteinrichtungen 17 sowie 20, die von einer Umschaltsteuerung 50 mit Zeitgliedern 51 über Signalleitungen 52 sowie 53 gesteuert werden, in die Wärmepumpen-Anlage integriert sind. Der Heiznetzwärmeaustauscher 5 ist über ein Sole-Leitungssystem 3, die Umweltwärmequelle 6 über ein Sole-Leitungssystem 4 mit der Umschalteinrichtung 17 verbunden. Die einzelnen Elemente werden wie in Fig. 9 durchströmt, so dass die gleichen Prozesse ablaufen. Im Wärmepumpen-Modul 16 findet eine Desorption am Zeolith-Wärmeaustauscher 10 statt, wird ein Wasserstrom 47 vom Desorber zum Kondensator gefördert und findet eine Kondensation am Kältemittel-Wärmeaustauscher 9 statt. Währenddessen findet im Wärmepumpen-Modul 15 eine Adsorption am Zeolith-Wärmeaustauscher 8, ein Wasserstrom 48 vom Verdampfer zum Adsorber und eine Verdampfung am Kältemittel-Wärmeaustauscher 7 statt. Dieser Zustand ist spätestens dann beendet, wenn im Modul 15 das gesamte Kältemittel vom Zeolith adsorbiert ist oder im Modul 16 der Zeolith bei maximaler Betriebstemperatur seinen trockenen Gleichgewichtszustand erreicht hat.

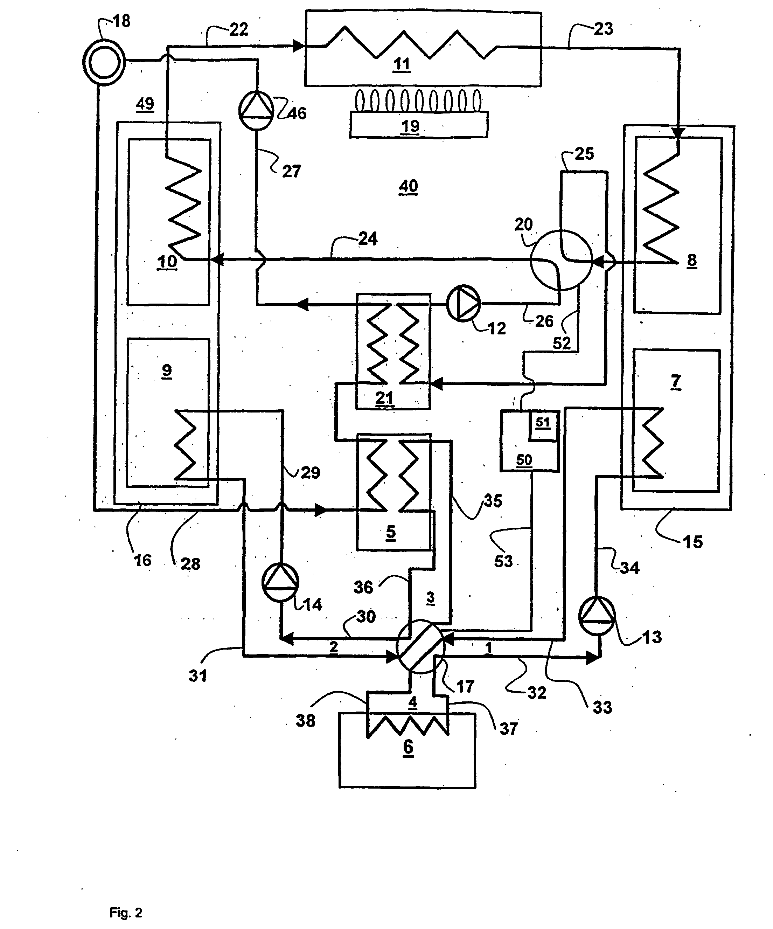

Nach Ablauf einer von den Zeitgliedern 51 vorgegebenen Zeit gibt die Umschaltsteuerung 50 ein Signal an die Umschalteinrichtung 20. Nun wird gemäß Fig. 2 mittels der Umschalteinrichtung 20 die Durchströmung der beiden Zeolith-Wärmeaustauscher 8 und 10 verändert. Der Zeolith-Wärmeaustauscher 10 wird nun von dem Wärmeträgermedium stromauf des Primär-Wärmeaustauschers 11 durchströmt, der Zeolith-Wärmeaustauscher 8 stromab des Primär-Wärmeaustauschers 11. Die Kältemittel-Wärmeaustauscher 7 und 9 werden unverändert durchströmt.

Hierdurch wird erreicht, dass der Zeolith-Wärmeaustauscher 8 erhitzt und der Zeolith-Wärmeaustauscher 10 abgekühlt wird. Dies bewirkt, dass die Desorption im Zeolith-Wärmeaustauscher 10 und damit die Kondensation im Kältemitel-Wärmeaustauscher 9 bzw. die Adsorption im Zeolith-Wärmeaustauscher 8 und damit die Verdampfung im Kältemittel-Wärmeaustauscher 7 jeweils zum Erliegen kommt.

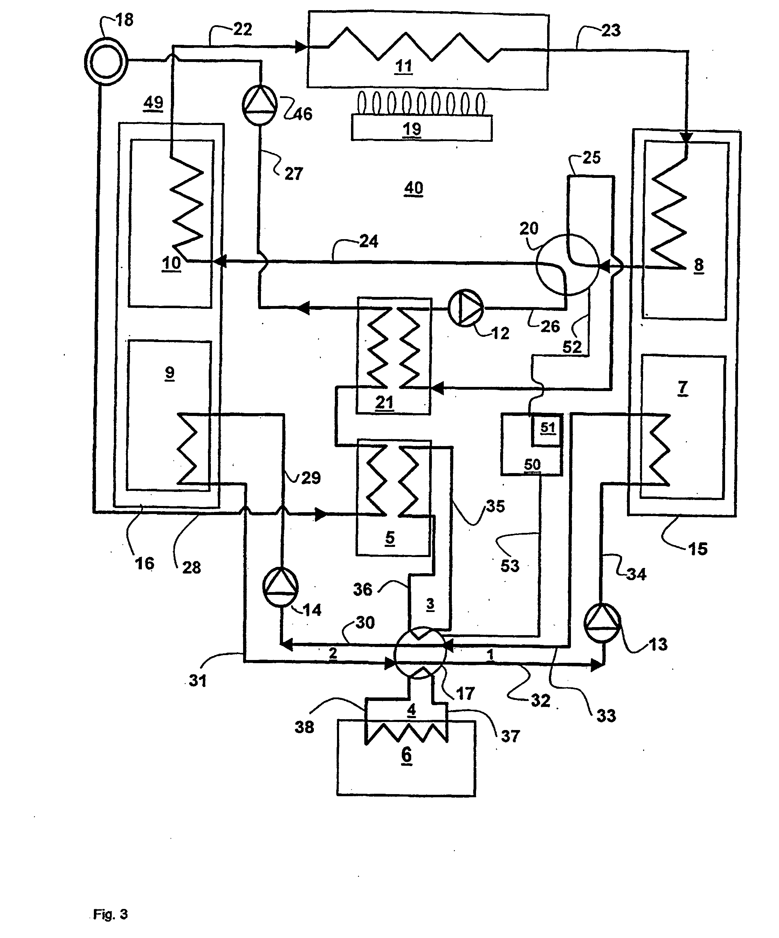

Im nächsten Arbeitsschritt gemäß Fig. 3 wird nun, nachdem die Kondensation und die Verdampfung zum Erliegen gekommen ist, die Umschalteinrichtung 17 so geschaltet, dass die beiden Kältemittel-Wärmeaustauscher 7 und 9 miteinander verbunden werden, um einen Wärmeaustausch zwischen diesen Elementen durchzuführen.

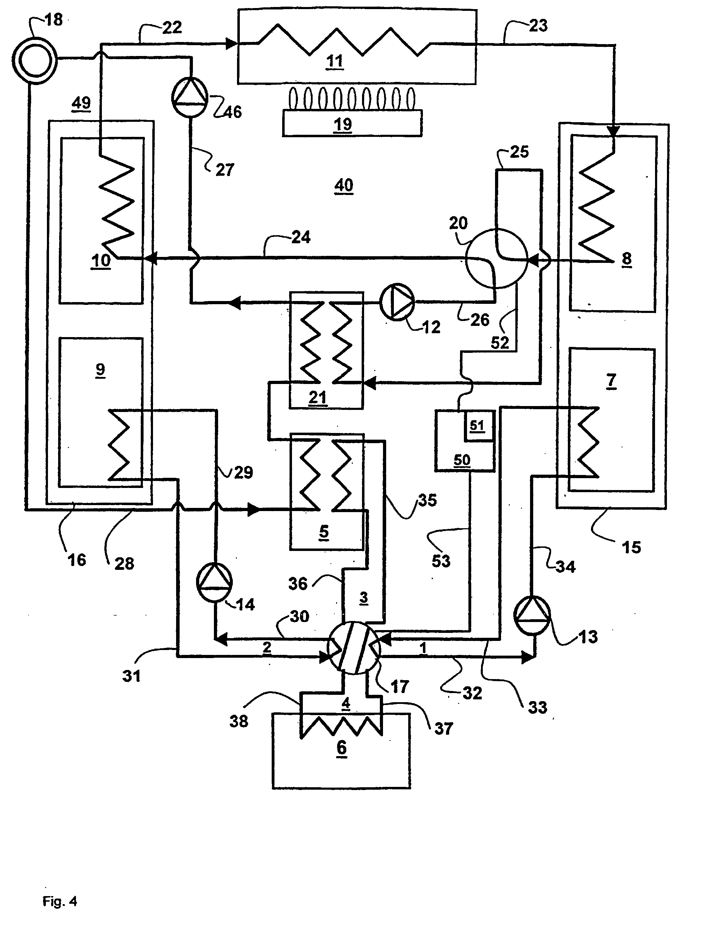

Anschließend wird gemäß Fig. 4 die Umschalteinrichtung 17 derart geschaltet, dass das Sole-Leitungssystem 1 des Kältemittel-Wärmeaustauschers 7 und das Sole-Leitungssystem 2 des Kältemittel-Wärmeaustauschers 9 jeweils intern kurzgeschlossen sind. Da der Zeolith-Wärmeaustauscher 8 desorbiert, heizt sich der Kältemittel-Wärmeaustauscher 7 durch kondensierendes Kältemittel im Wärmepumpen-Modul 15 auf. Währenddessen adsorbiert der Zeolith-Wärmeaustauscher 10, benötigt also Wasser. Dieses Wasser wird am Kältemittel-Wärmeaustauscher 9 im Wärmepumpen-Modul 16 verdampft, wobei das verdampfende Kältemittel eine Abkühlung des Kältemittel-Wärmeaustauschers 9 bewirkt.

Hierdurch wird erreicht, dass im nächsten Arbeitsschritt das korrekte Temperaturgefälle zwischen dem Kältemittel-Wärmeaustauscher 9 (kälter) und dem Umgebungswärmeaustauscher 6 (wärmer) sowie dem Kältemittel-Wärmeaustauscher 7 (wärmer) und dem Heiznetzwärmeaustauscher 5 (kälter) besteht. Hierdurch wird vermieden, dass Restwärme an die Umgebung abgegeben und das Heiznetz abgekühlt wird.

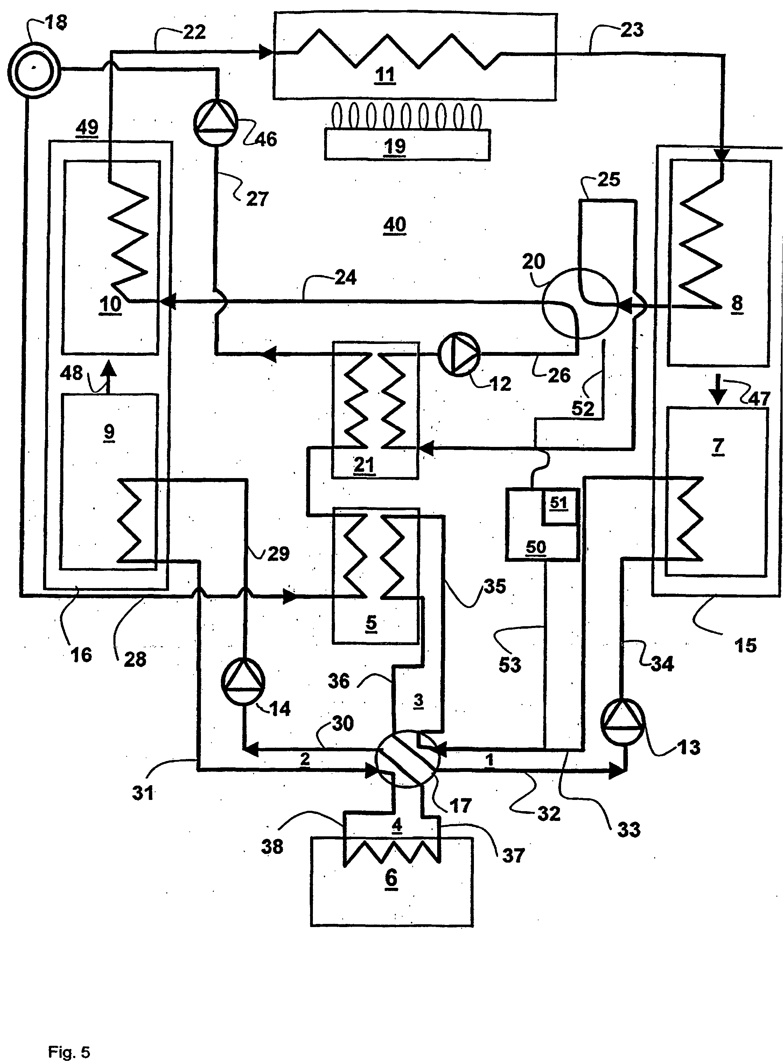

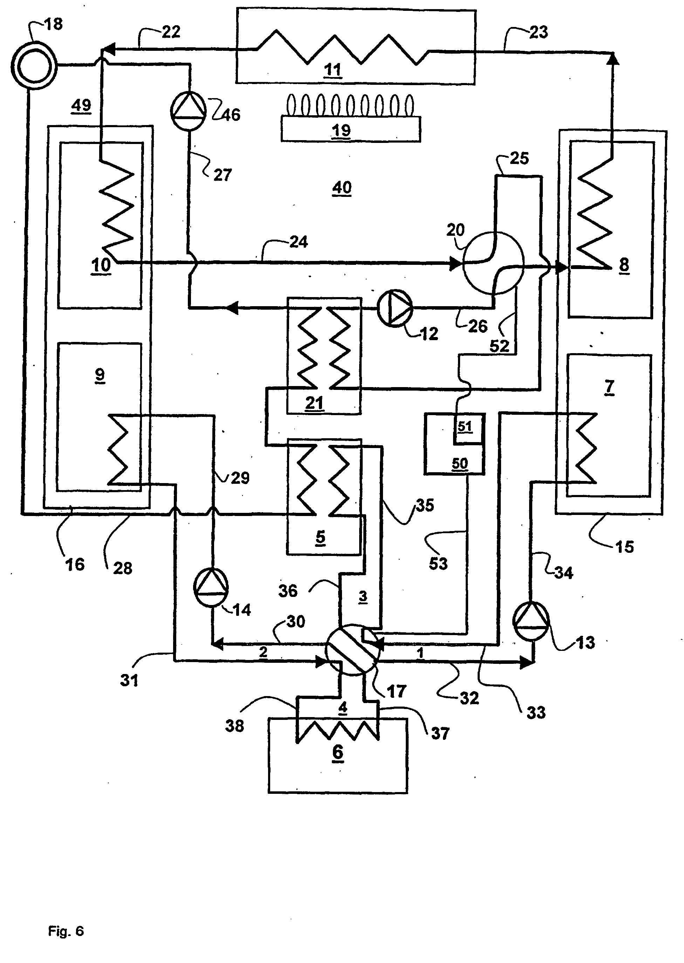

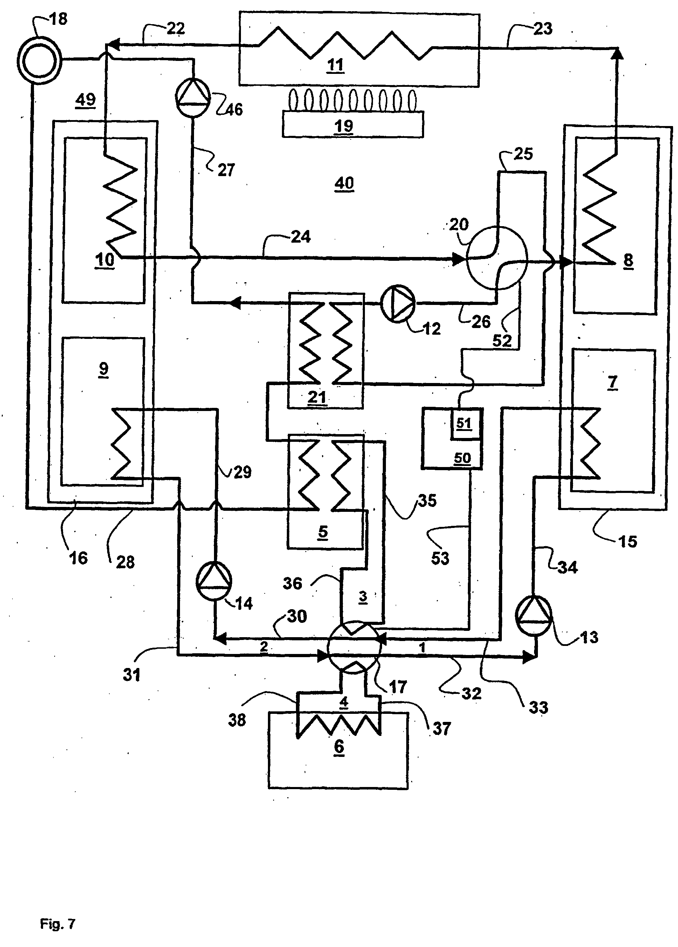

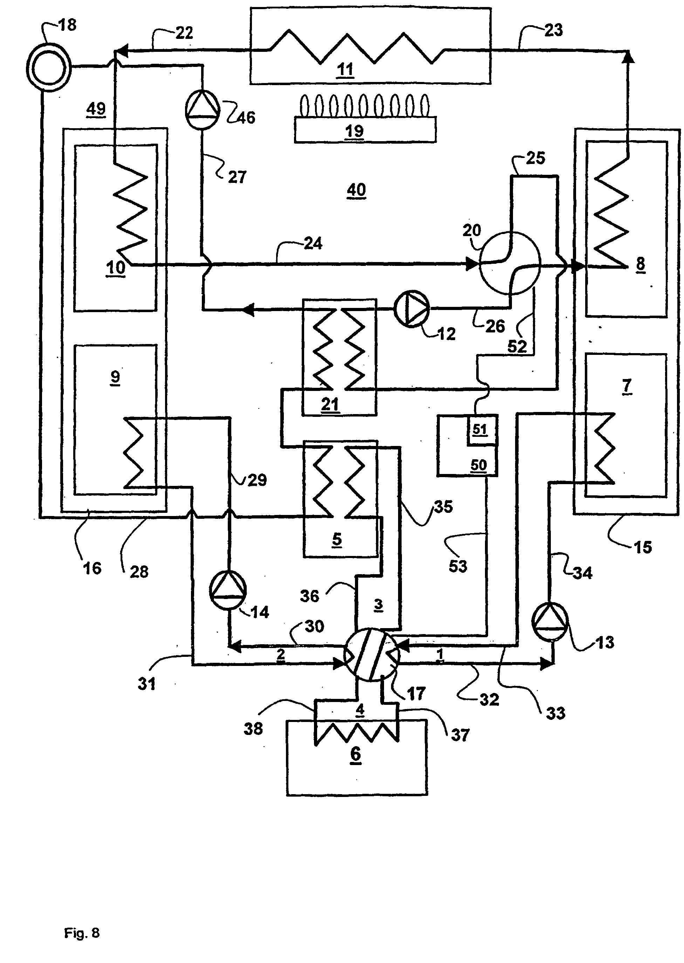

Gemäß Fig. 5 wird nach dem internen Wärmeausgleich in den Sole-Leitungssystemen 1 und 2 die Umschalteinrichtung 17 derartig geschaltet, dass der Kältemittel-Wärmeaustauscher 9 mit der Umweltwärmequelle 6 sowie der Kältemittel-Wärmeaustauscher 7 mit dem Heiznetzwärmeaustauscher 5 verbunden wird. Nun haben die Wärmepumpen-Module 15 und 16 im Vergleich zu Fig. 1 ihre Funktion jeweils getauscht. Die Funktionsweise ist dementsprechend äquivalent. Die Fig. 6 bis 8 zeigen die restlichen Arbeitsschritte des quasikontinuierlichen Arbeitsprozesses. Die Funktionsweise der Adsorptionswärmepumpe in Fig. 6 entspricht der in Fig. 2 unter Berücksichtigung der Tatsache, dass durch Umschaltungen entsprechende Bauteile ihre Durchströmungsrichtung, -reihenfolge und / oder Funktion verändert haben. Gleiches gilt für Fig. 7 / Fig. 3 sowie Fig. 8 / Fig. 4. Nach dem Arbeitsschritt gemäß Fig. 8 folgt wieder der Arbeitsschritt gemäß Fig. 1.

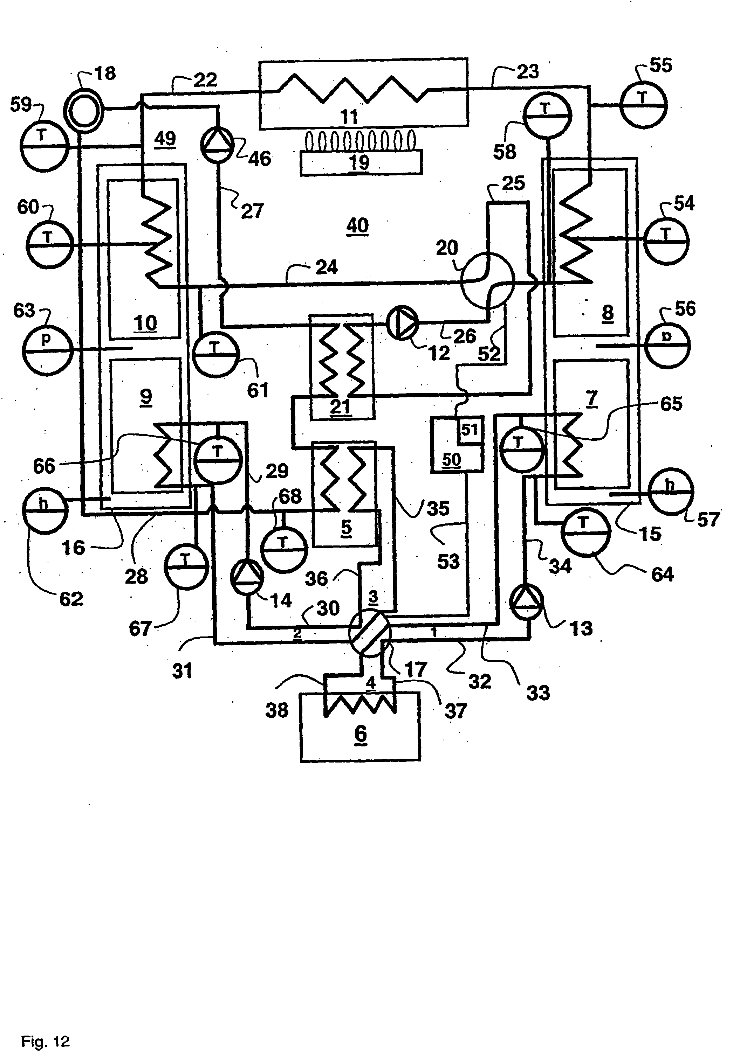

Fig. 12 zeigt eine erfindungsgemäße Adsorptionswärmepumpe mit Meßstellen zur Ermittlung des Betriebszustandes. Somit kann alternativ zu einer Umschaltung nach vorgegebenen Zeiten eine Umschaltung auch dann erfolgen, wenn bestimmte Grenztemperaturen überbeziehungsweise unterschritten oder Temperaturgradienten unterschritten werden. Im Adsorber-Desorber-Kreislauf 40 befinden sich Temperaturmeßstellen 54, 60 innerhalb der Zeolith-Wärmeaustauscher 8, 10, Temperaturmeßstellen 55 und 59 jeweils zwischen den Zeolith-Wärmeaustauschern 8 und 10 sowie dem Primär-Wärmeaustauscher 11 und Temperaturmeßstellen 58 und 61 zwischen den Zeolith-Wärmeaustauschern 8 und 10 sowie der Umschalteinrichtung 20. Um die Fülle der Messstellen einzuschränken wäre auch vorstellbar, dass statt der Temperaturmeßstellen 58 und 61 lediglich eine Temperaturmessstelle in Leitung 25 eingesetzt wird. Im Sole-Leitungssystem 1 befinden sich Temperaturmeßstellen stromauf 64 und stromab 65 des Kältemittel-Wärmeaustauschers 7. Im Sole-Leitungssystem 2 befinden sich Temperaturmeßstellen stromauf 66 und stromab 67 des Kältemittel-Wärmeaustauschers 9. Im Wärmepumpen-Modul 16 befindet sich eine Druckmeßstelle 63 sowie eine Füllstands-Meßstelle 62 am Boden des Wärmepumpen-Moduls 16. Im Wärmepumpen-Modul 15 befindet sich eine Druckmeßstelle 56 sowie eine Füllstands-Meßstelle 57 am Boden des Wärmepumpen-Moduls 15.

## Patentansprüche

1. Adsorptionswärmepumpe mit geschlossenem Adsorber-Desorber-Kreislauf (40), der mindestens zwei Wärmepumpen-Module (15, 16), bestehend jeweils aus einem Adsorber/Desorber (8, 10) und einem Kältemittel-Wärmeaustauscher (7, 9), einen von einer Wärmequelle (19) beaufschlagten und mit dieser in Verbindung stehenden Primär-Wärmeaustauscher (11), eine Umwälzpumpe (12) und eine erste Umschalteinrichtung (20) enthält, eine zweite Umschalteinrichtung (17), einen Heizungskreislauf (49), welcher mit einem Heiznetzwärmeaustauscher (5) verbunden ist, ein erstes Sole-Leitungssystem (1), welches die zweite Umschalteinrichtung (17) mit dem einen Kältemittel-Wärmeaustauscher (7) verbindet, ein zweites Sole- Leitungssystem (2), welches die zweite Umschalteinrichtung (17) mit dem anderen Kältemittel-Wärmeaustauscher (9) verbindet, ein drittes Sole- Leitungssystem (3), welches die zweite Umschalteinrichtung (17) mit dem einen Heiznetzwärmeaustauscher (5) verbindet, ein viertes Sole- Leitungssystem (4), welches die zweite Umschalteinrichtung (17) mit einer Umweltwärmequelle (6) verbindet,
wobei mittels der zweiten Umschalteinrichtung (17)
das erste Sole-Leitungssystem (1) schaltbar mit dem vierten Sole-Leitungssystem (4) oder dem dritten Sole-Leitungssystem (3) im Kreislauf verbindbar ist, während zeitgleich das zweite Sole-Leitungssystem (2) mit demjenigen der beiden dritten oder vierten Sole-Leitungssysteme (3, 4), das nicht mit dem ersten Sole-Leitungssystem (1) verbunden ist, im Kreislauf verbindbar ist,
und wobei das erste und zweite Sole-Leitungssystemen (1, 2) miteinander zum Kreislauf verbindbar sind und das erste und zweite Sole-Leitungssystem (1, 2) für sich allein verbindbar sind.

2. Adsorptionswärmepumpe gemäß Anspruch 1, **dadurch gekennzeichnet, dass** dei Adsorber / Desorber (8, 10) von einem Zeolith-Wärmeaustauscher gebildet wird.

3. Verfahren zum Betrieb einer Adsorptionswärmepumpe mit geschlossenem Adsorber-Desorber-Kreislauf (40), nach Anspruch 1 oder 2,
**dadurch gekennzeichnet, dass** bei der Umschaltung einer Verbindung des ersten Sole-Leitungssystems (1) vom vierten Sole-Leitungssystem (4) zum dritten Sole-Leitungssystem (3) beziehungsweise bei der Umschaltung einer Verbindung des ersten Sole-Leitungssystems (1) vom dritten Sole-Leitungssystem (3) zum vierten Sole-Leitungssystem (4) temporär die beiden ersten und zweiten Sole-Leitungssysteme (1, 2) miteinander verbunden werden und / oder die beiden ersten und zweiten Sole-Leitungssysteme (1, 2) jeweils intern kurzgeschlossen werden.

4. Verfahren zum Betrieb einer Adsorptionswärmepumpe gemäß Anspruch 3, **dadurch gekennzeichnet, dass** die Durchströmungsrichtung des Adsorber-Desorber-Kreislaufs (40) umgekehrt wird.

5. Verfahren zum Betrieb einer Adsorptionswärmepumpe gemäß einem der Ansprüche 3 oder 4, **dadurch gekennzeichnet, dass** die Zeit, während der in einem der Wärmepumpen-Module (15, 16) zeitgleich ein Adsorber (8, 10) adsorbiert, während der in diesem Wärmepumpen-Modul (15, 16) dazugehörige Kältemittel-Wärmeaustauscher (7, 9) verdampft oder während der in einem der Wärmepumpen-Module (15, 16) zeitgleich ein Desorber (8, 10) desorbiert, während der in diesem Wärmepumpen-Modul (15, 16) dazugehörige Kältemittel-Wärmeaustauscher (7, 9) kondensiert, zwischen 2 und 45 Minuten vorzugsweise 5 bis 30 Minuten dauert.

6. Verfahren zum Betrieb einer Adsorptionswärmepumpe gemäß einem der Ansprüche 3 bis 5, **dadurch gekennzeichnet, dass** die Phase, während der in einem der Wärmepumpen-Module (15, 16) zeitgleich ein Adsorber (8, 10) adsorbiert, während der in diesem Wärmepumpen-Modul (15, 16) dazugehörige Kältemittel-Wärmeaustauscher (7, 9) verdampft, beendet wird, sobald die Temperatur des Wärmeträgermediums im Adsorber-Desorber-Kreislauf (40) an einer Meßstelle (54, 55, 59, 60) innerhalb oder stromab des Adsorbers (8, 10) einen bestimmten Grenzwert T_{A} unter- oder überschreitet.

7. Verfahren zum Betrieb einer Adsorptionswärmepumpe gemäß einem der Ansprüche 3 bis 5, **dadurch gekennzeichnet, dass** die Phase, während der in einem der Wärmepumpen-Module (15, 16) zeitgleich ein Adsorber (8, 10) adsorbiert, während der in diesem Wärmepumpen-Modul (15, 16) dazugehörige Kältemittel-Wärmeaustauscher (7, 9) verdampft, beendet wird, sobald die Temperaturänderung des Wärmeträgermediums im Adsorber-Desorber-Kreislauf (40) an einer Meßstelle (54, 55, 59, 60) innerhalb oder stromab des Adsorbers (8, 10) einen bestimmten Grenzwert ΔT_{A}/Δt (Temperaturänderung pro Zeit) unterschreitet.

8. Verfahren zum Betrieb einer Adsorptionswärmepumpe gemäß einem der Ansprüche 3 bis 5, **dadurch gekennzeichnet, dass** die Phase, während der in einem der Wärmepumpen-Module (15, 16) zeitgleich ein Adsorber (8, 10) adsorbiert, während der in diesem Wärmepumpen-Modul (15, 16) dazugehörige Kältemittel-Wärmeaustauscher (7, 9) verdampft, beendet wird, sobald die Temperaturdifferenz des Wärmeträgermediums im Adsorber-Desorber-Kreislauf (40) zwischen zwei Meßstellen (54, 55, 58, 59, 60, 61) innerhalb, stromab oder stromauf des Adsorbers (8, 10) einen bestimmten Grenzwert ΔT_{AWT} unterschreitet.

9. Verfahren zum Betrieb einer Adsorptionswärmepumpe gemäß einem der Ansprüche 3 bis 5, **dadurch gekennzeichnet, dass** die Phase, während der in einem der Wärmepumpen-Module (15, 16) zeitgleich ein Adsorber (8, 10) adsorbiert, während der in diesem Wärmepumpen-Modul (15, 16) dazugehörige Kältemittel-Wärmeaustauscher (7, 9) verdampft, beendet wird, sobald der Druck im adsorbierenden Wärmepumpen-Modul (15, 16) an einer Meßstelle (56, 63) innerhalb dieses Wärmepumpen-Moduls (15, 16) einen bestimmten Grenzwert p_{A,min} unterschreitet.

10. Verfahren zum Betrieb einer Adsorptionswärmepumpe gemäß einem der Ansprüche 3 bis 5, **dadurch gekennzeichnet, dass** die Phase, während der in einem der Wärmepumpen-Module (15, 16) zeitgleich ein Adsorber (8, 10) adsorbiert, während der in diesem Wärmepumpen-Modul (15, 16) dazugehörige Kältemittel-Wärmeaustauscher (7, 9) verdampft, beendet wird, sobald der Füllstand des Kältemittels im adsorbierenden Wärmepumpen-Modul (15, 16) gemessen an einer Meßstelle (57, 62) am Boden des Wärmepumpen-Moduls (15, 16) einen bestimmten Grenzwert hₘᵢₙ unterschreitet.

11. Verfahren zum Betrieb einer Adsorptionswärmepumpe gemäß einem der Ansprüche 3 bis 5, **dadurch gekennzeichnet, dass** die Phase, während der in einem der Wärmepumpen-Module (15, 16) zeitgleich ein Desorber (8, 10) desorbiert, während der in diesem Wärmepumpen-Modul (15, 16) dazugehörige Kältemittel-Wärmeaustauscher (7, 9) kondensiert, beendet wird, sobald die Temperatur des Wärmeträgermediums im Adsorber-Desorber-Kreislauf (40) an einer Meßstelle (54, 58, 60, 61) innerhalb oder stromab des Desorbers (8, 10) einen bestimmten Grenzwert T_{D} unter- oder überschreitet.

12. Verfahren zum Betrieb einer Adsorptionswärmepumpe gemäß einem der Ansprüche 3 bis 5, **dadurch gekennzeichnet, dass** die Phase, während der in einem der Wärmepumpen-Module (15, 16) zeitgleich ein Desorber (8, 10) desorbiert, während der in diesem Wärmepumpen-Modul (15, 16) dazugehörige Kältemittel-Wärmeaustauscher (7, 9) kondensiert, beendet wird, sobald die Temperaturänderung des Wärmeträgermediums im Adsorber-Desorber-Kreislauf (40) an einer Meßstelle (54, 58, 60, 61) innerhalb oder stromab des Desorbers (8, 10) einen bestimmten Grenzwert ΔT_{D}/Δt unterschreitet.

13. Verfahren zum Betrieb einer Adsorptionswärmepumpe gemäß einem der Ansprüche 3 bis 5, **dadurch gekennzeichnet, dass** die Phase, während der in einem der Wärmepumpen-Module (15, 16) zeitgleich ein Desorber (8, 10) desorbiert, während der in diesem Wärmepumpen-Modul (15, 16) dazugehörige Kältemittel-Wärmeaustauscher (7, 9) kondensiert, beendet wird, sobald die Temperaturdifferenz des Wärmeträgermediums im Adsorber-Desorber-Kreislauf (40) zwischen zwei Meßstellen (55, 54, 58, 59, 60, 61) innerhalb, stromab oder stromauf des Desorbers (8, 10) einen bestimmten Grenzwert ΔT_{DWT} unterschreitet.

14. Verfahren zum Betrieb einer Adsorptionswärmepumpe gemäß einem der Ansprüche 3 bis 5, **dadurch gekennzeichnet, dass** die Phase, während der in einem der Wärmepumpen-Module (15, 16) zeitgleich ein Desorber (8, 10) desorbiert, während der in diesem Wärmepumpen-Modul (15, 16) dazugehörige Kältemittel-Wärmeaustauscher (7, 9) kondensiert, beendet wird, sobald der Druck im desorbierenden Wärmepumpen-Modul (15, 16) an einer Meßstelle (56, 63) innerhalb dieses Wärmepumpen-Moduls (15, 16) einen bestimmten Grenzwert p_{D,min} unterschreitet.

15. Verfahren zum Betrieb einer Adsorptionswärmepumpe gemäß einem der Ansprüche 3 bis 5, **dadurch gekennzeichnet, dass** die Phase, während der in einem der Wärmepumpen-Module (15, 16) zeitgleich ein Desorber (8, 10) desorbiert, während der in diesem Wärmepumpen-Modul (15, 16) dazugehörige Kältemittel-Wärmeaustauscher (7, 9) kondensiert, beendet wird, sobald der Füllstand des Kältemittels im desorbierenden Wärmepumpen-Modul (15, 16) gemessen an einer Meßstelle (57, 62) am Boden des Wärmepumpen-Moduls (15, 16) einen bestimmten Grenzwert hₘₐₓ überschreitet.

16. Verfahren zum Betrieb einer Adsorptionswärmepumpe gemäß einem der Ansprüche 3 bis 15, **dadurch gekennzeichnet, dass** nach der Phase, in der in einem Wärmepumpen-Modul (15, 16) ein Adsorber (8, 10) adsorbiert, während der in dem Wärmepumpen-Modul (15, 16) dazugehörige Kältemittel-Wärmeaustauscher (7, 9) verdampft, die Durchströmungsrichtung des Adsorber-Desorber-Kreislaufs (40) umgekehrt wird, während für eine bestimmte Zeit tₗ die Durchströmung der Sole-Leitungssysteme (1, 2 , 3, 4) unverändert bleibt.

17. Verfahren zum Betrieb einer Adsorptionswärmepumpe gemäß Anspruch 16, **dadurch gekennzeichnet, dass** die bestimmte Zeit tₗ zwischen 8 Sekunden und 8 Minuten vorzugsweise 10 bis 300 Sekunden beträgt.

18. Verfahren zum Betrieb einer Adsorptionswärmepumpe gemäß Anspruch 16, **dadurch gekennzeichnet, dass** die bestimmte Zeit tₗ endet, sobald die Temperaturdifferenz zwischen einer Messstelle (64 bzw. 66) stromauf und einer Meßstelle (65 bzw. 67) stromab des Verdampfers (7, 9) einen bestimmten Grenzwert ΔT_{V}, der der Temperatur an Meßstelle 64 bzw. 66 minus der Temperatur an Meßstelle 65 bzw. 67 entspricht, unterschreitet.

19. Verfahren zum Betrieb einer Adsorptionswärmepumpe gemäß Anspruch 16, **dadurch gekennzeichnet, dass** die bestimmte Zeit tₗ endet, sobald die Temperaturdifferenz zwischen einer Meßstelle (67 bzw. 65) stromab und einer Meßstelle (66 bzw. 64) stromauf des Kondensators (7, 9) einen bestimmten Grenzwert ΔT_{K}, der der Temperatur an Meßstelle 67 bzw. 65 minus der Temperatur an Meßstelle 66 bzw. 64 entspricht, unterschreitet.

20. Verfahren zum Betrieb einer Adsorptionswärmepumpe gemäß einem der Ansprüche 16 bis 19, **dadurch gekennzeichnet, dass** nach der Umschaltung der Umschalteinrichtung (20) die Umschalteinrichtung (17) die beiden ersten und zweiten Sole-Leitungssysteme (1, 2) für eine bestimmte Zeit t_{K} zusammen miteinander im Kreislauf verbindet.

21. Verfahren zum Betrieb einer Adsorptionswärmepumpe gemäß Anspruch 20, **dadurch gekennzeichnet, dass** die bestimmte Zeit t_{K} zwischen 5 Sekunden und 10 Minuten vorzugsweise 10 bis 300 Sekunden beträgt.

22. Verfahren zum Betrieb einer Adsorptionswärmepumpe gemäß Anspruch 8, **dadurch gekennzeichnet, dass** die bestimmte Zeit t_{K} endet, sobald die Temperaturdifferenz zwischen einer Meßstelle (65 bzw. 67) stromab des Verdampfers (7, 9) und einer Messstelle (67 bzw. 65) stromab des Kondensators (7, 9) und / oder die Temperaturdifferenz zwischen einer Meßstelle (64 bzw. 66) stromauf des Verdampfers (7, 9) und einer Meßstelle (66 bzw. 64) stromauf des Kondensators (7, 9) einen bestimmten Grenzwert ΔT_{VK} unterschreitet.

23. Verfahren zum Betrieb einer Adsorptionswärmepumpe gemäß einem der Ansprüche 16 bis 19, **dadurch gekennzeichnet, dass** nach der Umkehrung der Durchströmungsrichtung des Adsorber-Desorber-Kreislaufs (40) sowohl das erste Sole-Leitungssystem (1), als auch das zweite Sole-Leitungssystem (2) für eine bestimmte Zeit t_{S} in sich allein im Kreislauf verbunden sind.

24. Verfahren zum Betrieb einer Adsorptionswärmepumpe gemäß Anspruch 23, **dadurch gekennzeichnet, dass** die bestimmte Zeit t_{S} zwischen 0,5 und 20 Minuten vorzugsweise 1 bis 10 Minuten beträgt.

25. Verfahren zum Betrieb einer Adsorptionswärmepumpe gemäß Anspruch 23, **dadurch gekennzeichnet, dass** die bestimmte Zeit t_{S} endet, sobald die Temperatur des Wärmeträgermediums im ersten oder zweiten Sole-Leitungssystem (1, 2), welche die Umschalteinrichtung (17) jeweils mit einem Kältemittel-Wärmeaustauscher (7, 9) verbindet, an einer Meßstelle (65, 67) stromab des Kondensators (7, 9) größer oder gleich der Temperatur an einer Meßstelle (68) im Rücklauf des Heizkreislaufs (49) ist.

26. Verfahren zum Betrieb einer Adsorptionswärmepumpe gemäß Anspruch 23, **dadurch gekennzeichnet, dass** die bestimmte Zeit t_{S} endet, sobald die Temperatur des Wärmeträgermediums im ersten oder zweiten Sole-Leitungssystem (1, 2), welche die Umschalteinrichtung (17) jeweils mit einem Kältemittel-Wärmeaustauscher (7, 9) verbindet, an einer Meßstelle (65, 67) stromab des Verdampfers (7, 9) kleiner oder gleich der Umgebungstemperatur ist.

27. Verfahren zum Betrieb einer Adsorptionswärmepumpe gemäß mindestens einem der Ansprüche 20 bis 26, **dadurch gekennzeichnet, dass** zuerst die beiden ersten und zweiten Sole-Leitungssysteme (1, 2) für eine bestimmte Zeit t_{K} zusammen miteinander im Kreislauf verbunden werden bevor unmittelbar anschließend sowohl das erste Sole-Leitungssystem (1), als auch das zweite Sole-Leitungssystem (2) für eine bestimmte Zeit t_{S} in sich allein im Kreislauf verbunden wird.

28. Verfahren zum Betrieb einer Adsorptionswärmepumpe gemäß mindestens einem der Ansprüche 20 bis 27, **dadurch gekennzeichnet, dass** nach den internen Kreisläufen der beiden ersten und zweiten Sole-Leitungssysteme (1, 2) gemäß mindestens einem der Ansprüche 20 bis 24 das erste oder zweite Sole-Leitungssystem (1, 2), das zuletzt mit dem dritten Soleleitungssystem (3) verbunden war, mit dem vierten Sole-Leitungssystem (4), verbunden wird und das erste oder zweite Sole-Leitungssystem (1, 2), das zuletzt mit dem vierten Soleleitungssystem (4) verbunden war, mit dem dritten Sole-Leitungssystem (3) verbunden wird.

## Claims

1. An adsorption heat pump with a closed adsorber/desorber circuit (40) which contains at least two heat pump modules (15, 16), each of these comprising an adsorber/desorber (8, 10) and a refrigerant heat exchanger (7, 9), further a primary heat exchanger (11) fed from and connected with a heat source (19), a circulation pump (12) and a first switch-over unit (20) and which further contains a second switch-over unit (17), a heating circuit (49) connected with a heating network heat exchanger (5), a first brine line system (1) connecting the second switch-over unit (17) with one refrigerant heat exchanger (7), a second brine line system (2) connecting the second switch-over unit (17) with the other refrigerant heat exchanger (9), a third brine line system (3) connecting the second switch-over unit (17) with one heating network heat exchanger (5), a fourth brine line system (4) connecting the second switch-over unit (17) with an environmental heat source (6), wherein the first brine line system (1) is selectably connectable in circuit with the fourth brine line system (4) or the third brine line system (3), while at the same time the second brine line system (2) is connectable in circuit with that of the two third or fourth brine line systems (3, 4) which is not connected with the first brine line system (1),
and wherein the first and second brine line systems (1, 2) are mutually connectable in circuit with each other and the first and the second brine line systems (1, 2) are connectable individually alone.

2. An adsorption heat pump as claimed in Claim 1 **characterised in that** the adsorber/desorber (8, 10) is formed by a zeolite heat exchanger.

3. A process for the operation of an adsorption heat pump with a closed adsorber/desorber circuit (40) as claimed in Claim 1 or 2 **characterised in that** when switching a connection of the first brine line system (1) from the fourth brine line system (4) to the third brine line system (3), or when switching a connection of the first brine line system (1) from the third brine line system (3) to the fourth brine line system (4), the two first and second brine line systems (1, 2) are temporarily connected with each other and/or each of the two first and second brine line systems (1, 2) is short-cut internally.

4. A process for the operation of an adsorption heat pump as claimed in Claim 3 **characterised in that** the direction of flow in the adsorber/desorber circuit (40) is reversed.

5. A process for the operation of an adsorption heat pump as claimed in any of Claims 3 or 4 **characterised in that** the time during which in one of the heat pump modules (15, 16) an adsorber (8, 10) adsorbs while at the same time the refrigerant heat exchanger (7, 9) associated with this heat pump module (15, 16) is evaporating, or the time during which in one of the heat pump modules (15, 16) a desorber (8, 10) desorbs while at the same time the refrigerant heat exchanger (7, 9) associated with this heat pump module (15, 16) is condensing, is between 2 and 45 minutes, preferably 5 to 30 minutes.

6. A process for the operation of an adsorption heat pump as claimed in any of Claims 3 to 5 **characterised in that** the phase during which in one of the heat pump modules (15, 16) an adsorber (8, 10) adsorbs while at the same time the refrigerant heat exchanger (7, 9) associated with this heat pump module (15, 16) is evaporating, is terminated as soon as the temperature of the heat carrier medium in the adsorber/desorber circuit (40), measured at a measuring point (54, 55, 59, 60) within or downstream of the adsorber (8, 10), exceeds or falls below a certain limit value T_{A}.

7. A process for the operation of an adsorption heat pump as claimed in any of Claims 3 to 5 **characterised in that** the phase during which in one of the heat pump modules (15, 16) an adsorber (8, 10) adsorbs while at the same time the refrigerant heat exchanger (7, 9) associated with this heat pump module (15, 16) is evaporating, is terminated as soon as the temperature change in the heat carrier medium in the adsorber/desorber circuit (40), measured at a measuring point (54, 55, 59, 60) within or downstream of the adsorber (8, 10), falls below a certain limit value ΔT_{A}/Δt (temperature change per time).

8. A process for the operation of an adsorption heat pump as claimed in any of Claims 3 to 5 **characterised in that** the phase during which in one of the heat pump modules (15, 16) an adsorber (8, 10) adsorbs while at the same time the refrigerant heat exchanger (7, 9) associated with this heat pump module (15, 16) is evaporating, is terminated as soon as the temperature difference of the heat carrier medium in the adsorber/desorber circuit (40), measured between two measuring points (54, 55, 58, 59, 60, 61) within, downstream or upstream of the adsorber (8, 10), falls below a certain limit value ΔT_{AWT}.

9. A process for the operation of an adsorption heat pump as claimed in any of Claims 3 to 5 **characterised in that** the phase during which in one of the heat pump modules (15, 16) an adsorber (8, 10) adsorbs while at the same time the refrigerant heat exchanger (7, 9) associated with this heat pump module (15, 16) is evaporating, is terminated as soon as the pressure in the heat carrier medium in the adsorbing heat pump module (15, 16), measured at a measuring point (56, 63) within this heat pump module (15, 16), falls below a certain limit value p_{A,min}.

10. A process for the operation of an adsorption heat pump as claimed in any of Claims 3 to 5 **characterised in that** the phase during which in one of the heat pump modules (15, 16) an adsorber (8, 10) adsorbs while at the same time the refrigerant heat exchanger (7, 9) associated with this heat pump module (15, 16) is evaporating, is terminated as soon as the liquid level of the refrigerant in the adsorbing heat pump module (15, 16), measured at a measuring point (57, 62) at the bottom of the heat pump module (15, 16), falls below a certain limit value hₘᵢₙ.

11. A process for the operation of an adsorption heat pump as claimed in any of Claims 3 to 5 **characterised in that** the phase during which in one of the heat pump modules (15, 16) a desorber (8, 10) desorbs while at the same time the refrigerant heat exchanger (7, 9) associated with this heat pump module (15, 16) is condensing, is terminated as soon as the temperature of the heat carrier medium in the adsorber/desorber circuit (40), measured at a measuring point (54, 58, 60, 61) within or downstream of the desorber (8, 10), exceeds or falls below a certain limit value T_{D}.

12. A process for the operation of an adsorption heat pump as claimed in any of Claims 3 to 5 **characterised in that** the phase during which in one of the heat pump modules (15, 16) a desorber (8, 10) desorbs while at the same time the refrigerant heat exchanger (7, 9) associated with this heat pump module (15, 16) is condensing, is terminated as soon as the temperature change in the heat carrier medium in the adsorber/desorber circuit (40), measured at a measuring point (54, 58, 60, 61) within or downstream of the desorber (8, 10), falls below a certain limit value ΔT_{D}/Δt.

13. A process for the operation of an adsorption heat pump as claimed in any of Claims 3 to 5 **characterised in that** the phase during which in one of the heat pump modules (15, 16) a desorber (8, 10) desorbs while at the same time the refrigerant heat exchanger (7, 9) associated with this heat pump module (15, 16) is condensing, is terminated as soon as the temperature difference of the heat carrier medium in the adsorber/desorber circuit (40), measured between two measuring points (55, 54, 58, 59, 60, 61) within, downstream or upstream of the desorber (8, 10), falls below a certain limit value ΔT_{AWT}.

14. A process for the operation of an adsorption heat pump as claimed in any of Claims 3 to 5 **characterised in that** the phase during which in one of the heat pump modules (15, 16) a desorber (8, 10) desorbs while at the same time the refrigerant heat exchanger (7, 9) associated with this heat pump module (15, 16) is condensing, is terminated as soon as the pressure in the heat carrier medium in the desorbing heat pump module (15, 16), measured at a measuring point (56, 63) within this heat pump module (15, 16), falls below a certain limit value p_{D,min}.

15. A process for the operation of an adsorption heat pump as claimed in any of Claims 3 to 5 **characterised in that** the phase during which in one of the heat pump modules (15, 16) a desorber (8, 10) desorbs while at the same time the refrigerant heat exchanger (7, 9) associated with this heat pump module (15, 16) is condensing, is terminated as soon as the liquid level of the refrigerant in the desorbing heat pump module (15, 16), measured at a measuring point (57, 62) at the bottom of the heat pump module (15, 16), exceeds a certain limit value hₘₐₓ.

16. A process for the operation of an adsorption heat pump as claimed in any of Claims 3 to 15 **characterised in that** after the phase in which in one of the heat pump modules (15, 16) an adsorber (8, 10) adsorbs while the refrigerant heat exchanger (7, 9) associated with the heat pump module (15, 16) is evaporating, the direction of flow in the adsorber/desorber circuit (40) is reversed, while for a certain time tₗ the direction of flow in the brine line systems (1, 2, 3, 4) remains unchanged.

17. A process for the operation of an adsorption heat pump as claimed in Claim 16 **characterised in that** the certain time tₗ is between 8 seconds and 8 minutes, preferably 10 to 300 seconds.

18. A process for the operation of an adsorption heat pump as claimed in Claim 16 **characterised in that** the certain time tₗ ends as soon as the temperature difference between a measuring point (64 or 66) upstream and a measuring point (65 or 67, respectively) downstream of the evaporator (7, 9) falls below a certain limit value ΔTᵥ which latter corresponds to the temperature at the measuring point 64 or 66 minus the temperature at the measuring point 65 or 67, respectively.

19. A process for the operation of an adsorption heat pump as claimed in Claim 16 **characterised in that** the certain time tₗ ends as soon as the temperature difference between a measuring point (67 or 65) downstream and a measuring point (66 or 64, respectively) upstream of the condenser (7, 9) falls below a certain limit value ΔT_{K} which latter corresponds to the temperature at the measuring point 67 or 65 minus the temperature at the measuring point 66 or 64, respectively.

20. A process for the operation of an adsorption heat pump as claimed in any of Claims 16 to 19 **characterised in that** after switching of the switch-over unit 20 the switch-over unit 17 connects the two first and seconds brine line systems (1, 2) with each other to a circuit for a certain time t_{K}.

21. A process for the operation of an adsorption heat pump as claimed in Claim 20 **characterised in that** the certain time t_{K} is between 5 seconds and 10 minutes, preferably 10 to 300 seconds.

22. A process for the operation of an adsorption heat pump as claimed in Claim 8 **characterised in that** the certain time t_{K} ends as soon as the temperature difference between a measuring point (65 or 67) downstream of the evaporator (7, 9) and a measuring point (67 or 65, respectively) downstream of the condenser (7, 9) and/or the temperature difference between a measuring point (64 or 66) upstream of the evaporator (7, 9) and a measuring point (66 or 64, respectively) upstream of the condenser (7, 9) falls below a certain limit value ΔT_{VK}.

23. A process for the operation of an adsorption heat pump as claimed in any of Claims 16 to 19 **characterised in that** after the reversal of the direction of flow in the adsorber/desorber circuit (40) the first brine line system (1) as well as the second brine line system (2) are each connected in a circuit of their own for a certain time t_{S}.

24. A process for the operation of an adsorption heat pump as claimed in Claim 23 **characterised in that** the certain time t_{S} is between 0.5 and 20 minutes, preferably 1 to 10 minutes.

25. A process for the operation of an adsorption heat pump as claimed in Claim 23 **characterised in that** the certain time t_{S} ends as soon as the temperature of the heat carrier medium in the first or second brine line system (1, 2) which the switch-over unit (17) selectively connects with a refrigerator heat exchanger (7, 9), measured at a measuring point downstream of the condenser (7, 9), is higher than or equal to the temperature at a measuring point (68) in the return flow of the heating circuit (49).

26. A process for the operation of an adsorption heat pump as claimed in Claim 23 **characterised in that** the certain time t_{S} ends as soon as the temperature of the heat carrier medium in the first or second brine line system (1, 2) which the switch-over unit (17) selectively connects with a refrigerator heat exchanger (7, 9), measured at a measuring point downstream of the evaporator (7, 9), is lower than or equal to the ambient temperature.

27. A process for the operation of an adsorption heat pump as claimed in at least one of the Claims 20 to 26 **characterised in that** the two first and second brine line systems (1, 2) are first connected with each other in a circuit for a certain time t_{K} before, immediately following, the first brine line system (1) as well as the second brine line system (2) are each connected in a circuit of their own for a certain time t_{S}.

28. A process for the operation of an adsorption heat pump as claimed in at least one of the Claims 20 to 27 **characterised in that** after the internal circuiting of the two first and second brine line systems (1, 2) in accordance with at least of the Claims 20 to 24, the first or the second brine line system (1, 2) which was last connected with the third brine line system (3) is connected with the fourth brine line system (4), and the first or second brine line system (1, 2) which was last connected with the fourth brine line system (4) is connected with the third brine line system (3).

## Revendications

1. Thermopompe à adsorption avec circuit adsorbant/désorbant (40) fermé comprenant au moins deux modules de thermopompe (15, 16) se composant chacun d'un adsorbant/désorbant (8, 10) et d'un échangeur de chaleur à frigorigène (7, 9),ainsi qu'un échangeur de chaleur primaire (11) relié à une source calorifique (19) qui l'alimente, une pompe de circulation (12) et un premier organe commutateur (20), un deuxième organe commutateur (17), un circuit chauffant (49) relié à un échangeur de chaleur de circuit chauffant (5),un premier système canalisateur de saumure (1) qui relie le deuxième organe commutateur (17) à l'un des échangeurs de chaleur (7), un deuxième système canalisateur de saumure (2) qui relie le deuxième organe commutateur (17) à l'autre échangeur de chaleur (9), un troisième système canalisateur de saumure (3) qui relie le deuxième organe commutateur (17) à l'un des échangeurs de chaleur (5), un quatrième système carialisateur de saumure (4) qui relie le deuxième organe commutateur (17) à une source de chaleur naturelle (6), le deuxième organe commutateur (17) permettant de relier à volonté dans le circuit le système canalisateur (1) au système canalisateur (4) ou au système canalisateur (3), le système (2) pouvant en même temps être reliè dans le circuit à celui des systèmes (3, 4) qui n'est pas relié au système (1), les systèmes (1, 2) pouvant être reliés en circuit ou individuellement.

2. Thermopompe à adsorption suivant la revendication 1, **caractérisé par le fait que** l'adsorbant/désorbant (8, 10) est constitué par un échangeur de chaleur à zéolite.

3. Procédé visant la marche d'une thermopompe à adsorption avec circuit adsorbant/désorbant (40) fermé, **caractérisé par le fait qu'**à la commutation d'une liaison entre le système canalisateur (1) et le système canalisateur (4) en une liaison entre le système (1) et le système (3), ou à la commutation d'une liaison entre le système canalisateur (1) et le système canalisateur (3) en une liaison entre le système (1) et le système (4), les deux systèmes canalisateurs (1, 2) sont reliés temporairement entre eux et/ou les systèmes canalisateurs (1, 2) sont chacun intérieurement court-circuités.

4. Procédé visant la marche d'une thermopompe à adsorption suivant la revendication 3, **caractérisé par le fait que** le sens d'écoulement du circuit adsorbant-désorbant (40) est renversé.

5. Procédé visant la marche d'une thermopompe à adsorption suivant l'une des revendications 3 ou 4, **caractérisé par le fait que** le temps pendant lequel un adsorbant (8, 10) dans l'un des modules (15, 16) adsorbe simultanément pendant que l'échangeur de chaleur (7, 9) correspondant faisant partie de ce module (15, 16) vaporise, ou pendant lequel un désorbant (8, 10) dans un des modules (15, 16) désorbe simultanément pendant que l'échangeur de chaleur (7, 9) correspondant dans ce module (15,16) condense, dure entre 2 et 45 minutes, de préférence 5 à 30 minutes.

6. Procédé visant la marche d'une thermopompe à adsorption suivant l'une des revendications 3 à 5, **caractérisé par le fait que** la phase pendant laquelle un adsorbant (8,10) dans l'un des modules (15, 16) adsorbe simultanément pendant que l'échangeur de chaleur (7, 9) correspondant faisant partie de ce module (15, 16) vaporise, est terminée dès que la température de l'agent calorifère dans le circuit adsorbant/désorbant (40) dépasse ou reste, dans un point de mesure (54, 55, 59, 60) dans l'adsorbant (8, 10) ou en aval, inférieure à une valeur limite T_{A} déterminée.

7. Procédé visant la marche d'une thermopompe à adsorption suivant l'une des revendications 3 à 5, **caractérisé par le fait que** la phase pendant laquelle un adsorbant (8, 10) dans l'un des modules (15, 16) adsorbe simultanément pendant que l'échangeur de chaleur (7, 9) correspondant faisant partie de ce module (15, 16) vaporise, est terminée dès que la variation de température de l'agent calorifère dans le circuit adsorbant/désorbant (40) rest, dans un point de mesure (54, 55, 59, 60) dans ou en aval de l'adsorbant (8, 10), inférieure à une valeur limite ΔT_{A}/Δt déterminée (variation de température par unité de temps).

8. Procédé visant la marche d'une thermopompe à adsorption suivant l'une des revendications 3 à 5, **caractérisé par le fait que** la phase pendant laquelle un adsorbant (8, 10) dans l'un des modules (15, 16) adsorbe simultanément pendant que l'échangeur de chaleur (7, 9) correspondant faisant partie de ce module (15, 16) vaporise, est terminée dès que la différence de température de l'agent calorifère dans le circuit adsorbant/désorbant (40) reste, entre deux points de mesure (54, 55, 58, 59, 60, 61) dans ou en aval ou en amont de l'adsorbant (8, 10), inférieure à une valeur limite ΔT_{AWT} déterminée.

9. Procédé visant la marche d'une thermopompe à adsorption suivant l'une des revendications 3 à 5, **caractérisé par le fait que** la phase pendant laquelle un adsorbant (8, 10) dans l'un des modules (15, 16) adsorbe simultanément pendant que l'échangeur de chaleur (7, 9) correspondant faisant partie de ce module (15, 16) vaporise, est terminée dès que la pression dans le module (15, 16) adsorbant reste, dans un point de mesure (56, 63) dans le module (15, 16) concerné, inférieure à une valeur limite P_{A,min} déterminée.

10. Procédé visant la marche d'une thermopompe à adsorption suivant l'une des revendications 3 à 5, **caractérisé par le fait que** la phase pendant laquelle un adsorbant (8, 10) dans l'un des modules (15, 16) adsorbe simultanément pendant que l'échangeur de chaleur (7, 9) correspondant faisant partie de ce modulé (15, 16) vaporise, est terminée dès que le niveau du frigorigène dans le module (15, 16) reste, dans un point de mesure (57, 62) sur le fond du module (15, 16), inférieure à une valeur limite hₘᵢₙ déterminée.

11. Procédé visant la marche d'une thermopompe à adsorption suivant l'une des revendications 3 à 5, **caractérisé par le fait que** la phase pendant laquelle un désorbant (8, 10) dans l'un des modules (15, 16) désorbe simultanément pendant que l'échangeur de chaleur (7, 9) correspondant faisant partie de ce module (15, 16) condense, est terminée dès que la température de l'agent calorifère dans le circuit adsorbant/désorbant (40) dépasse ou reste, dans un point de mesure (54, 58, 60, 61) dans le désorbant (8, 10) ou en aval, inférieure à une valeur limite T_{D} déterminéee.

12. Procédé visant la marche d'une thermopompe à adsorption suivant l'une des revendications 3 à 5, **caractérisé par le fait que** la phase pendant laquelle un désorbant (8, 10) dans l'un des modules (15, 16) désorbe simultanément pendant que l'échangeur de chaleur (7, 9) correspondant faisant partie de ce module (15, 16) condense, est terminée dès que la variation de température de l'agent calorifère dans le circuit adsorbant/désorbant (40) dépasse ou reste, dans un point de mesure (54, 58, 60, 61) dans le désorbant (8, 10) ou en aval, inférieure à une valeur limite ΔT_{D}/Δt déterminée.

13. Procédé visant la marche d'une thermopompe à adsorption suivant l'une des revendications 3 à 5, **caractérisé par le fait que** la phase pendant laquelle un désorbant (8, 10) dans l'un des modules (15, 16) désorbe simultanément pendant que l'échangeur de chaleur (7, 9) correspondant faisant partie de ce module (15, 16) condense, est terminée dès que la différence de température de l'agent calorifère dans le circuit adsorbant/désorbant (40) dépasse ou reste, entre deux points de mesure (55, 54, 58, 59, 60, 61) dans le désorbant (8, 10) ou en aval ou en amont, inférieure à une valer limite ΔT_{DWT} déterminée.

14. Procédé visant la marche d'une thermopompe à adsorption suivant l'une des revendications 3 à 5, **caractérisé par le fait que** la phase pendant laquelle un désorbant (8, 10) dans l'un des modules (15, 16) désorbe simultanément pendant que l'échangeur de chaleur (7, 9) correspondant faisant partie de ce module (15, 16) condense, est terminée dès que la pression dans le module (15, 16) désorbant reste, dans un point de mesure (56, 63) dans le module (15, 16) concerné, inférieure à une valeur limite P_{D,min} déterminée.

15. Procédé visant la marche d'une thermopompe à adsorption suivant l'une des revendications 3 à 5, **caractérisé par le fait que** la phase pendant laquelle un désorbant (8, 10) dans l'un des modules (15, 16) désorbe simultanément pendant que l'échangeur de chaleur (7, 9) correspondant faisant partie de ce module (15, 16) condense, est terminée dès que le niveau du frigorigène dans le module désorbant (15, 16) dépasse, dans un point de mesure (57, 62) sur le fond du module (15, 16), une valeur limite hₘₐₓ déterminée.

16. Procédé visant la marche d'une thermopompe à adsorption suivant l'une des revendications 3 à 15, **caractérisé par le fait qu'**après la phase pendant laquelle un adsorbant (8, 10) dans l'un des modules (15, 16) adsorbe pendant que l'échangeur de chaleur (7, 9) correspondant faisant partie de ce module (15, 16) vaporise, le sens d'écoulement du circuit adsorbant/désorbant (40) est renversé, l'écoulement dans les systèmes (1, 2, 3, 4) ne variant pas pendant un temps tₗ déterminé.

17. Procédé visant la marche d'une thermopompe à adsorption suivant la revendication 16, **caractérisé par le fait que** le temps tₗ dure entre 8 secondes et 8 minutes, de préférence 10 à 300 secondes.

18. Procédé visant la marche d'une thermopompe à adsorption suivant la revendication 16, **caractérisé par le fait que** le temps tₗ se termine au moment où la différence de température entre un point de mesure (64 ou 66) en amont de l'vaporateur (7, 9) et un point de mesure (65 ou 67) en aval de l'évaporateur reste inférieure à une valeur limite ΔT_{V} déterminée qui correspond à la température au point de mesure 64 ou 66 moins la température au point 65 ou 67.

19. Procédé visant la marche d'une thermopompe à adsorption suivant la revendication 16, **caractérisé par le fait que** le temps tₗ se termine au moment où la différence de température entre un point de mesure (67 ou 65) en aval du condensateur (7, 9) et un point de mesure (66 ou 64) en amont du condensateur reste inférieure à une valeur limite ΔT_{K} déterminée qui correspond à la température au point de mesure 67 ou 65 moins la température au point 66 ou 64.

20. Procédé visant la marche d'une thermopompe à adsorption suivant l'une des revendications 16 à 19, **caractérisé par le fait qu'**après la commutation de l'organe commutateur (20), l'organe commutateur (17) relie entre eux les deux systèmes canalisateurs (1, 2) pendant un temps t_{K} déterminé

21. Procédé visant la marche d'une thermopompe à adsorption suivant la revendication 20, **caractérisé par le fait que** le temps t_{K} dure entre 5 secondes et 10 minutes, de préférence 10 à 300 secondes.

22. Procédé visant la marche d'une thermopompe à adsorption suivant la revendication 8, **caractérisé par le fait que** le temps t_{K} se termine au moment où la différence de température entre un point de mesure (65 ou 67) en aval de l'évaporateur (7, 9) et un point de mesure (67 ou 65) en aval du condensateur (7, 9) et/ou la différence de température entre un point de mesure (64 ou 66) en amont de l'évaporateur (7, 9) et un point de mesure (66 ou 64) en amont du condensateur (7, 9) reste inférieure à une valeur limite ΔT_{VK} déterminée.

23. Procédé visant la marche d'une thermopompe à adsorption suivant l'une des revendications 16 à 19, **caractérisé par le fait qu'après** le renversement du sens d'écoulement du circuit adsorbant/désorbant (40) aussi bien le système canalisateur (1) que le système (2) constituent pour un temps t_{S} déterminé des unités isolées dans le circuit.

24. Procédé visant la marche d'une thermopompe à adsorption suivant la revendication 23, **caractérisé par le fait que** le temps t_{S} dure entre 0,5 et 20 minutes, de préférence 1 à 10 minutes.

25. Procédé visant la marche d'une thermopompe à adsorption suivant la revendication 23, **caractérisé par le fait que** le temps t_{S} se termine dès que la température de l'agent calorifère dans le premier ou le deuxième système canalisateur (1, 2) qui chacun relie l'organe commutateur (17) à un échangeur de chaleur à frigorigène (7, 9), est supérieure ou égale, dans un point de mesure (65, 67) en aval du condensateur (7, 9), à la température dans un point de mesure (68) du retour du circuit chauffant (49).

26. Procédé visant la marche d'une thermopompe à adsorption suivant la revendication 23, **caractérisé par le fait que** le temps t_{S} se termine dès que la température de l'agent calorifère dans le premier ou le deuxième système canalisateur (1, 2), qui chacun relie l'organe commutateur (17) à un échangeur de chaleur à frigorigène (7, 9), est inférieure ou égale, dans un point de mesure (65, 67) en aval de l'évaporateu (7, 9), à la température ambiante.

27. Procédé visant la marche d'une thermopompe à adsorption suivant au moins l'une des revendications 20 à 26, **caractérisé par le fait que** d'abord les deux systèmes canalisateurs (1, 2) sont, pour un temps t_{K} déterminé, reliés ensemble dans le circuit avant que, immédiatement après, aussi bien le premier système (1) que le deuxième système (2) constituent pour un temps t_{S} déterminé des unités isolées dans le circuit.

28. Procédé visant la mache d'une thermopompe à adsorption suivant au moins l'une des revendications 20 à 27, **caractérisé par le fait que**, après les circuits internes des deux systèmes canalisateurs (1, 2) suivant au moins l'une des revendications 20 à 27, le premier ou le deuxième système (1, 2) relié au troisième système canalisateur (3), est relié au quatrième système (4), et le premier ou deuxième système (1, 2) relié au quatrième système (4) est relié au troisième système (3).
